# EUROPÄISCHE PATENTSCHRIFT

(11) **EP 2 649 722 B1**
(45) Veröffentlichungstag und Bekanntmachung des Hinweises auf die Patenterteilung: **18.12.2019**
(21) Anmeldenummer: 11767957.1
(22) Anmeldetag: 21.09.2011
(51) Int. Cl.: H02P 21/00

(54) **ANSTEUERVERFAHREN UND -VORRICHTUNG FÜR EINE ELEKTRISCHE MASCHINE**
DRIVE METHOD AND APPARATUS FOR AN ELECTRIC MACHINE
PROCÉDÉ ET DISPOSITIF DE COMMANDE POUR UN MOTEUR ÉLECTRIQUE

(30) Priorität: 24.11.2010 DE 102010061897
(43) Veröffentlichungstag der Anmeldung: 16.10.2013
(73) Patentinhaber: Robert Bosch GmbH, 70442 Stuttgart (DE)
(72) Erfinder: MERKEL, Tino, 71701 Schwieberdingen (DE); KRETSCHMER, Markus, 71711 Murr (DE); GOETTING, Gunther, 70499 Stuttgart (DE)
(86) Internationale Anmeldenummer: PCT/EP2011/066413
(87) Internationale Veröffentlichungsnummer: WO 2012/069229

(56) Entgegenhaltungen:
- DE-A1-102007 031 548
- JP-A- 1 034 190
- CONSOLI A ET AL: "Sensorless control of PM synchronous motors at zero speed", CONFERENCE RECORD OF THE 1999 IEEE INDUSTRY APPLICATIONS CONFERENCE. THIRTY-FORTH IAS ANNUAL MEETING (CAT. NO.99CH36370), IEEE, IEEE PISCATAWAY, NJ, USA, Bd. 2, 3. Oktober 1999 (1999-10-03), Seiten 1033-1040, XP010355328, DOI: 10.1109/IAS.1999.801632 ISBN: 978-0-7803-5589-7

## Beschreibung

Die vorliegende Erfindung betrifft ein Verfahren zum Ansteuern einer elektrischen Maschine im Motoranlaufbetrieb mittels einer Leistungselektronik, insbesondere zur Anwendung in einem Kraftfahrzeug, wobei die Leistungselektronik eine Mehrzahl von ansteuerbaren Leistungsschaltern aufweist, die dazu angeschlossen sind, die elektrische Maschine mehrphasig mit elektrischem Strom zu versorgen, wobei die Leistungselektronik so angesteuert wird, dass die elektrische Maschine ein Anlaufdrehmoment abgibt.

Ferner betrifft die vorliegende Erfindung eine Vorrichtung zum Ansteuern einer elektrischen Maschine im Motoranlaufbetrieb, insbesondere zur Anwendung in einem Kraftfahrzeug, mit einer Leistungselektronik, die eine Mehrzahl von ansteuerbaren Leistungsschaltern aufweist, die dazu angeschlossen sind, die elektrische Maschine mehrphasig mit elektrischem Strom zu versorgen, und mit einem Steuergerät zur Ansteuerung der Leistungselektronik.

Ferner betrifft die vorliegende Erfindung einen Kraftfahrzeug-Antriebsstrang mit wenigstens einer elektrischen Maschine zum Bereitstellen von Antriebsleistung und mit einer Vorrichtung zum Ansteuern der elektrischen Maschine der oben beschriebenen Art.

### Stand der Technik

Auf dem Gebiet der Kraftfahrzeug-Antriebstechnik ist es allgemein bekannt, eine elektrische Maschine als alleinigen Antrieb oder gemeinsam mit einem Antriebsmotor eines anderen Typs (Hybridantrieb) zu verwenden. In derartigen Elektro- oder Hybridfahrzeugen werden typischerweise elektrische Maschinen als Antriebsmotor verwendet. Zur Ansteuerung solcher elektrischen Maschinen in einem Kraftfahrzeug dient eine Leistungselektronik, die einen Wechselrichter beinhaltet, der die Gleichspannung/Gleichstrom einer an Bord des Kraftfahrzeuges befindlichen (Hochvolt)-Batterie in einen Wechselstrom umwandelt. Der Wechselrichter weist dabei in der Regel eine Mehrzahl von ansteuerbaren Leistungsschaltern auf. Die Leistungsschalter werden mittels eines Steuergerätes pulsweiten-moduliert angesteuert, damit die elektrische Maschine im Motorbetrieb ein bestimmtes Drehmoment bei einer bestimmten Drehzahl einer Abtriebswelle der elektrischen Maschine erzeugt.

Zur Ansteuerung derartiger Wechselrichter für elektrische Maschinen ist es bekannt, eine feldorientierte Regelung (auch Vektorregelung genannt) zu verwenden. Hierbei wird ein Raumzeiger (beispielsweise ein Stromzeiger) bewegt, der mit der Abtriebswelle der elektrischen Maschine rotiert. Mit anderen Worten werden die zur Ansteuerung der elektrischen Maschine benötigten Phasenströme in ein rotorfestes, mit dem Magnetfeld der Maschine mitdrehendes Koordinatensystem (sogenanntes dq-System) umgerechnet. Bei der feldorientierten Regelung werden statt der Phasenströme dann die auf diese Weise transformierten Stromkomponenten Id und Iq geregelt.

Wenn ein rein elektrisch angetriebenes Fahrzeug oder ein Hybridfahrzeug von der elektrischen Maschine angetrieben werden soll, kann es vorkommen, dass bereits bei Stillstand des Fahrzeugs ein sehr hohes Anfahrdrehmoment notwendig ist, um das Fahrzeug zu bewegen. Dies kann beispielsweise beim Anfahren am Berg, im Hängerbetrieb oder bei einer Bordsteinüberfahrt der Fall sein, oder dann, wenn das Fahrzeuggewicht in Bezug auf die Maximalleistung der elektrischen Maschine relativ hoch ist.

Bei Fahrzeugstillstand befindet sich die elektrische Maschine ebenfalls im Stillstand. Im Stillstand und beim Anfahren aus dem Stillstand werden die Leistungsschalter ungleichmäßig belastet, da in diesem Zustand immer der oder die gleichen Leistungsschalter den für das Anlauf- bzw. Stillstandsdrehmoment benötigten Strom führen. Unter Motoranlaufbetrieb wird im folgenden der Betrieb der elektrischen Maschine im Stillstand oder mit einer sehr geringen Drehzahl verstanden, bei dem diese ungleichmäßige Belastung der Leistungsschalter auftreten kann. Falls mehrere Leistungsschalter in diesem Zustand Strom führen, ist in der Regel einer von diesen besonders stark belastet, nämlich der mit dem maximalen Stromfluss.

Aus Consoli A et al. ("Sensorless control of PM synchronous motors at zero speed", CONFERENCE RECORD OF THE 1999 IEEE INDUSTRY APPLICATIONS CONFERENCE; THIRTY-FOURTH IAS ANNUAL MEETING (CAT. NO.99CH36370), IEEE, IEEE PISCATAWAY, NJ, USA, Bd. 2, 3; Oktober 1999 (1999-10-03), Seiten 1033-1040, XP010355328, DOI: 10.1109/IAS.1999.801632 ISBN: 978-0-7803-5589-7) ist ein Verfahren mit den Merkmalen des Oberbegriffs des Anspruchs 1 bereits bekannt. Ein ähnliches Verfahren wird auch in der Offenlegungsschrift DE 10 2007 031 548 A1 beschrieben. Ein Verfahren zum Verringern eines Leistungsverlusts einer elektrischen Maschine ist aus der JP 1034190 A bekannt.

### Offenbarung der Erfindung

Die vorliegende Erfindung mit den Merkmalen des Anspruchs 1 stellt ein Verfahren zum Ansteuern einer elektrischen Maschine, insbesondere einer elektrischen Drehfeldmaschine, im Motoranlaufbetrieb mittels einer Leistungselektronik, insbesondere zur Anwendung in einem Kraftfahrzeug, bereit, wobei die Leistungselektronik eine Mehrzahl von ansteuerbaren Leistungsschaltern aufweist, die dazu an der elektrischen Maschine angeschlossen sind, die elektrische Maschine mehrphasig mit elektrischem Strom zu versorgen, wobei die Leistungselektronik so angesteuert wird, dass die stillstehende oder elektrische Maschine ein Stillstands- oder Anlaufdrehmoment abgibt, wobei die Ansteuerung der Leistungselektronik zur Abgabe des Stillstands- bzw. Anlaufdrehmomentes derart erfolgt, dass die Schaltstellung von wenigstens zwei der Leistungsschalter verändert wird, so dass die Leistungsschalter gleichmäßiger belastet werden.

Ferner wird die obige Aufgabe gelöst durch eine Vorrichtung zum Ansteuern einer elektrischen Maschine der eingangs genannten Art, mit einem Steuergerät zur Ansteuerung der Leistungselektronik, wobei das Steuergerät dazu eingerichtet ist, das Verfahren der oben genannten Art durchzuführen.

Schließlich stellt die vorliegende Erfindung einen Kraftfahrzeug-Antriebsstrang mit wenigstens einer elektrischen Maschine zum Bereitstellen von Antriebsleistung und mit einer Vorrichtung zum Ansteuern der elektrischen Maschine der oben beschriebenen Art bereit.

Unter einem Motoranlaufbetrieb wird vorliegend ein Betriebszustand verstanden, bei dem die Drehzahl der elektrischen Maschine Null oder klein ist (bspw. kleiner als 10 Umdrehungen/Sekunde) und ein Drehmoment angefordert wird. Vorteile der Erfindung

Durch die vorliegende Erfindung kann die thermische Spitzenbelastung der einzelnen Leistungsschalter reduziert werden.

Die Ansteuerung der Leistungselektronik zur Abgabe des Stillstandsdrehmomentes erfolgt mit anderen Worten so, dass ein Arbeitspunkt der Leistungselektronik verändert wird, insbesondere schrittweise, um auf diese Weise eine gleichmäßigere Belastung der Leistungsschalter zu erzielen. Die schrittweise Veränderung des Arbeitspunktes kann dabei so erfolgen, dass das Anlaufdrehmoment im Wesentlichen konstant bleibt. Alternativ oder zusätzlich ist es möglich, den Arbeitspunkt so zu verändern, dass das Anlaufdrehmoment schrittweise und in schneller Folge so verändert wird, dass das im Mittel abgegebenes Drehmoment dem geforderten Anlaufdrehmoment entspricht. Die Änderung des Drehmomentes sollte dabei vorzugsweise so schnell erfolgen, dass für den Fahrer kein Ruckeln des Fahrzeugs oder Ähnliches spürbar ist.

Die elektrische Maschine weist in der Regel eine Anzahl von Erregerwicklungen auf. Für jede Erregerwicklung bzw. für jede Phase der elektrischen Maschine wird vorzugsweise ein Brücken-Zweig mit je wenigstens zwei Leistungsschaltern vorgesehen. Eine dreiphasige elektrische Maschine, wie beispielsweise eine permanenterregte Synchronmaschine, weist daher vorzugsweise eine sogenannte B6-Brücke mit drei Brücken-Zweigen auf.

Die Leistungsschalter können vorzugsweise Leistungshalbleiterbauteile sein, insbesondere IBGTs.

Von besonderem Vorzug ist es, wenn die Ansteuerung feldorientiert erfolgt, wobei ein Raumzeiger zur Abgabe des Stillstandsdrehmomentes schrittweise verändert wird.

Auf diese Weise kann die Änderung des Arbeitspunktes steuerungstechnisch auf einfache Art und Weise erfolgen.

Erfindungsgemäß ist vorgesehen, dass der Raumzeiger ein Stromzeiger ist, der zur Abgabe des Anlaufdrehmomentes schrittweise entlang einer Linie konstanten Drehmomentes verdreht wird.

Durch diese Maßnahme kann das geforderte Anlaufdrehmoment konstant bereitgestellt werden. Hierdurch kann das erfindungsgemäße Verfahren durchgeführt werden, ohne dass ein Führer des Kraftfahrzeuges dies bemerkt.

Gemäß einer weiteren bevorzugten Ausführungsform ist der Raumzeiger ein Stromzeiger, der schrittweise derart verändert wird, dass sich das Anlaufdrehmoment verändert.

Wie bereits oben erläutert, sollte dies innerhalb bestimmter Grenzen und auf schnelle Art und Weise erfolgen, so dass ein Fahrer des Kraftfahrzeuges die Drehmomentänderung nicht oder kaum wahrnimmt. Daher sollten die angefahrenen Arbeitspunkte so gewählt werden, dass im zeitlichen Mittel das angeforderte Anlaufdrehmoment bereitgestellt wird.

Bei dieser Ausführungsform ist es von besonderem Vorzug, wenn der Stromzeiger entlang einer Linie minimalen Gesamtstromes bewegt wird.

Hierdurch kann der Wirkungsgrad erhöht werden.

Ferner ist es insgesamt bevorzugt, wenn der Raumzeiger oszillierend oder zyklisch oder schrittweise im Bereich zwischen wenigstens zwei Grenzwerten bewegt wird.

Hierdurch kann eine Vielzahl unterschiedlicher Arbeitspunkte angefahren werden, so dass die Belastung der einzelnen Leistungsschalter noch gleichmäßiger erfolgen kann.

Insgesamt ist ferner von Vorteil, wenn das erfindungsgemäße Verfahren dann angewendet wird, wenn die Drehzahl der elektrischen Maschine einen bestimmten Grenzwert nicht überschreitet, der beispielsweise bei 10 Umdrehungen/Sekunde, vorzugsweise bei 1 Umdrehung/Sekunde liegen kann.

Ferner ist es insbesondere bevorzugt, wenn das erfindungsgemäße Verfahren dann angewendet wird, wenn ein Anlaufdrehmoment oberhalb eines bestimmten Schwellenwertes angefordert wird. Der Schwellenwert kann beispielsweise bei 50% des maximalen Drehmomentes liegen, vorzugsweise bei 80% des maximalen Drehmomentes.

Kurze Beschreibung der Zeichnungen
- Fig. 1: zeigt in schematischer Form ein Kraftfahrzeug mit einem Antriebsstrang, der eine elektrische Maschine sowie eine Vorrichtung zum Ansteuern dieser Maschine aufweist;
- Fig. 2: stellt ein Schaltbild einer beispielhaften elektrischen Maschine und einer zugehörigen Leistungselektronik dar;
- Fig. 3: zeigt ein Diagramm von Stromkomponenten Id und Iq zur Durchführung einer feldorientierten Ansteuerung der elektrischen Maschine;
- Fig. 4: zeigt ein der Fig. 3 vergleichbares Diagramm zur Darstellung einer Ausführungsform eines erfindungsgemäßen Verfahrens;
- Fig. 5: zeigt ein der Fig. 3 vergleichbares Diagramm zur Darstellung einer weiteren Ausführungsform eines erfindungsgemäßen Verfahrens;
- Fig. 6: zeigt ein der Fig. 3 vergleichbares Diagramm zur Darstellung einer weiteren Ausführungsform eines erfindungsgemäßen Verfahrens;
- Fig. 7: zeigt ein der Fig. 3 vergleichbares Diagramm zur Darstellung einer weiteren Ausführungsform eines erfindungsgemäßen Verfahrens;

### Ausführungsformen der Erfindung

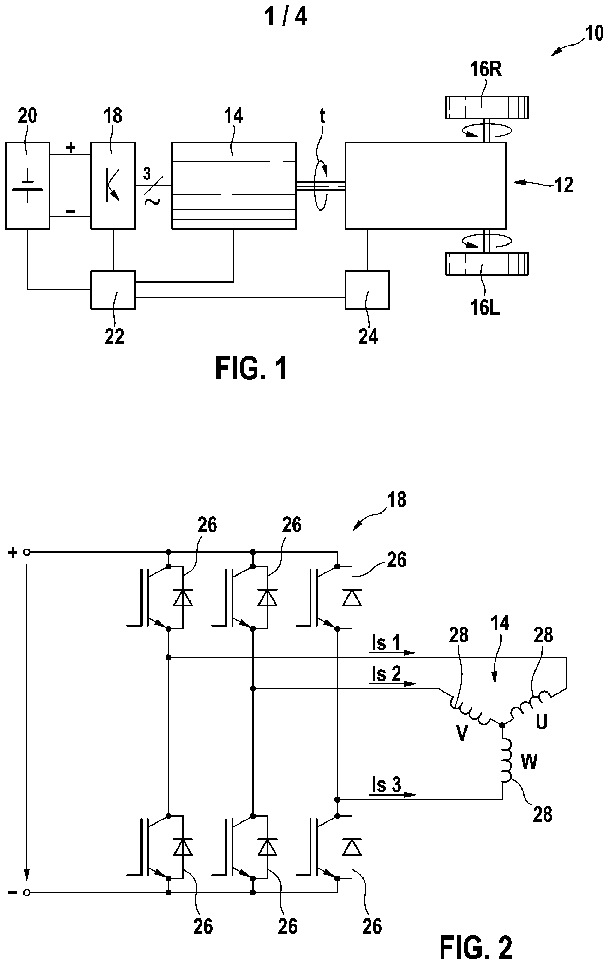

In Fig. 1 ist ein Kraftfahrzeug schematisch dargestellt und generell mit 10 bezeichnet. Das Kraftfahrzeug 10 weist einen Antriebsstrang 12 auf, der im vorliegenden Fall eine elektrische Maschine 14 zur Bereitstellung von Antriebsleistung beinhaltet. Der Antriebsstrang 12 dient zum Antreiben von angetriebenen Rädern 16L, 16R des Fahrzeugs 10.

Die elektrische Maschine 14 stellt an einer Abtriebswelle ein Drehmoment t bereit und dreht mit einer einstellbaren Drehzahl.

Der Antriebsstrang 12 kann dazu eingerichtet sein, das Fahrzeug 10 alleine mittels der elektrischen Maschine 14 anzutreiben (Elektrofahrzeug). Alternativ kann die elektrische Maschine 14 Teil eines Hybrid-Antriebsstranges 12 sein, wobei der Antriebsstrang 12 einen weiteren, in Fig. 1 nicht näher bezeichneten Antriebsmotor wie einen Verbrennungsmotor oder dergleichen beinhalten kann. Ferner kann der Antriebsstrang 12 in diesem Fall ein Getriebe und dergleichen aufweisen.

Die elektrische Maschine 14 ist mehrphasig ausgebildet (im vorliegenden Fall mit drei Phasen) und wird mittels einer Leistungselektronik 18 angesteuert. Die Leistungselektronik 18 ist mit einer Energieversorgung wie einer Gleichspannungsversorgung (z.B. Akkumulator) 20 des Fahrzeugs 10 verbunden und dient dazu, eine von dem Akkumulator 20 bereitgestellte Gleichspannung in drei Wechselströme für die drei Phasen der elektrischen Maschine umzurichten. Die Leistungselektronik 18 weist zu diesem Zweck eine Mehrzahl von Leistungsschaltern auf und wird mittels eines Steuergerätes 22 angesteuert. Das Steuergerät 22 kann ferner mit der elektrischen Maschine 14 verbunden sein, um beispielsweise Istwerte der Drehzahl und/oder Drehstellung eines Rotors der elektrischen Maschine 14 zu erhalten. Ferner kann das Steuergerät 22 mit dem Akkumulator 20 verbunden sein. Schließlich kann das Steuergerät 22 mit einer übergeordneten oder gleichberechtigten Steuereinrichtung 24 zur Ansteuerung von weiteren Komponenten des Antriebsstranges 12 verbunden sein.

Fig. 2 zeigt in schematischer Form die Leistungselektronik 18 und die elektrische Maschine 14.

Die Leistungselektronik 18 weist zur Bereitstellung von drei Phasenströmen Is1, Is2 und Is3 insgesamt sechs Leistungsschalter in Form von Leistungshalbleitern (wie beispielsweise IGBTs) auf, die in einer an sich bekannten H-Brückenschaltung miteinander verbunden sind. Die Mittenabgriffe der drei Brückenzweige sind mit jeweiligen Erregerwicklungen 28 der elektrischen Maschine 14 verbunden. Die Erregerwicklungen 28 sind sternförmig miteinander verbunden, wobei vorzugsweise kein Nullleiter vorgesehen ist.

Die Erregerwicklungen 28 sind in Fig. 2 mit Phase V, Phase U, Phase W bezeichnet. Die Leistungsschalter 26 werden pulsweiten-moduliert angesteuert, derart, dass im Wesentlichen sinusförmige Phasenströme Is1, Is2, Is3 bereitgestellt werden können, die zudem gegeneinander phasenverschoben sein können.

Zur Erleichterung der Ansteuerung der Leistungshalbleiter werden diese feldorientiert bzw. nach der Art einer Vektorsteuerung angesteuert. Hierbei werden die Phasenströme Is1, Is2 und Is3 in ein rotorfestes, mit dem Magnetfeld der elektrischen Maschine 14 mitdrehendes Koordinatensystem (sogenanntes dq-System) umgerechnet. Statt der Phasenströme werden hierbei die auf diese Weise transformierten Stromkomponenten Id und Iq gesteuert.

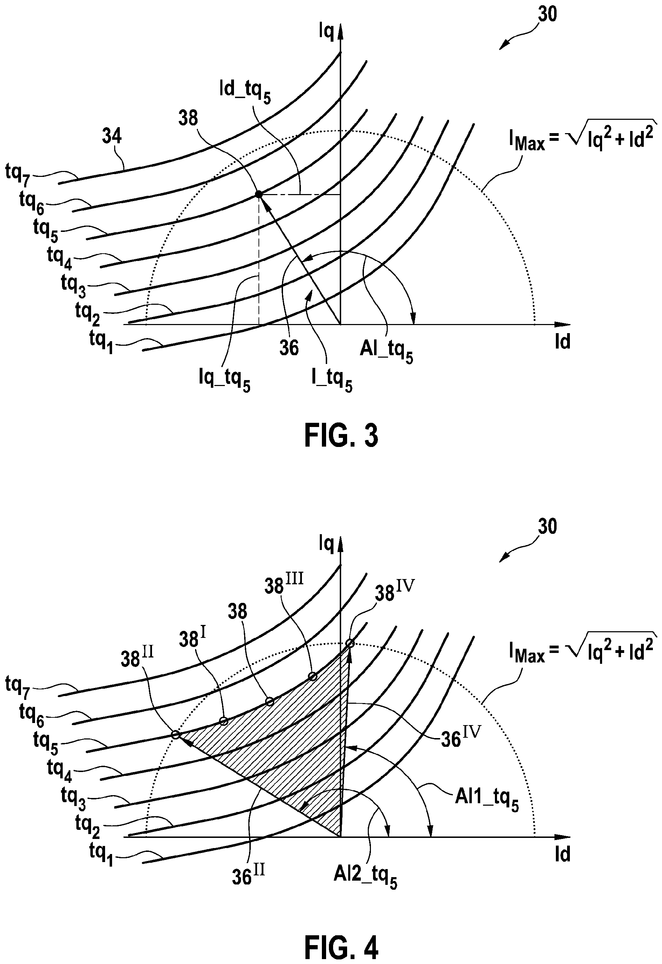

In Fig. 3 ist ein Diagramm dieser transformierten Stromkomponenten Id, Iq gezeigt. Damit die elektrische Maschine 14 ein bestimmtes Drehmoment t liefert, müssen diese Ströme id, iq jeweils auf einen bestimmten Wert eingestellt werden. Der Gesamtstrom ergibt sich dabei nach der Formel I = √(Iq² + Id²). Der maximale Gesamtstrom Iₘₐₓ der elektrischen Maschine 14 ist als Halbkreis 32 in dem Diagramm 30 eingezeichnet.

Fig. 3 zeigt ferner eine Mehrzahl von Linien konstanten Drehmoments, die mit tq₁, tq₂, tq₃, tq₄, tq₅, tq₆ und tq₇ bezeichnet sind.

Diese Drehmomentlinien haben einen gekrümmten Verlauf, so dass sich für das Bereitstellen eines bestimmten Drehmomentes (beispielsweise tq₅) ein Arbeitspunkt 38 einstellen lässt, bei dem der Gesamtstrom minimal ist. Der Gesamtstrom I_tq₅ ergibt sich für diesen Fall als Stromzeiger 36, der aus den transformierten Stromkomponenten Id_tq₅ und Iq_tq₅ zusammengesetzt ist. Der Stromzeiger 36 hat dabei einen bestimmten Betrag und einen bestimmten Stromzeigerwinkel, der in Fig. 3 bei AI_tq₅ gezeigt ist.

Sofern ein vergleichsweise hohes Drehmoment angefordert wird (wie beispielsweise tq₅) und die Drehzahl der elektrischen Maschine 14 hierbei null oder sehr klein ist, kann es aufgrund einer ungleichmäßigen Belastung der Leistungsschalter 26 zu einer nicht tolierierbaren Erwärmung einzelner Leistungsschalter kommen. Im Stand der Technik werden daher als Schutzmaßnahme der Strom und damit das Drehmoment auf einen niedrigeren Wert reduziert.

Fig. 4 zeigt ein der Fig. 3 vergleichbares Diagramm, bei dem statt einer Drehmomentverringerung eine schrittweise Veränderung des Arbeitspunktes im Motoranlaufbetrieb durchgeführt wird. Hierbei wird von dem Freiheitsgrad Gebrauch gemacht, dass das angeforderte Drehmoment tq₅ über unterschiedliche Stromzeiger eingestellt werden kann. Fig. 4 zeigt hierbei den möglichen Variationsbereich der Stromkomponenten Id und Iq, die jeweils zu dem gleichen Drehmoment tq₅ führen. Ferner ist in Fig. 4 der Arbeitspunkt 38 eingezeichnet, bei dem der Stromverbrauch minimal ist.

Der Stromzeiger 36 kann nun schrittweise auf andere Arbeitspunkte 38', 38", 38"', 38^{IV} eingestellt werden, ohne dass sich das abgegebene Drehmoment ändert.

Die Grenzwerte der Arbeitspunktverschiebung liegen an den Schnittpunkten der Kennlinie des angeforderten Drehmomentes tq₅ mit dem maximalen Strom I_{MAX}, und sind in Fig. 4 bei 38' bzw. 38^{IV} gezeigt. Die zugehörigen Stromzeiger an diesen Grenzwerten sind bei 36" und 36^{IV} gezeigt.

Mit anderen Worten wird im Motoranlaufbetrieb ein schrittweise drehender Stromzeiger 36 eingestellt (z.B. vom Winkel AI1_TQ5 zum Winkel AI2_TQ5), was dazu führt, dass ständig andere Leistungsschalter den jeweiligen maximalen Strom leiten. Damit wird die Maximallast, die im Stillstand normalerweise bei genau einem Leistungsschalter dauerhaft auftritt, zyklisch auf mehrere Leistungsschalter verteilt. Dies hat zur Folge, dass im Stillstand die thermische Spitzenbelastung an jedem einzelnen Leistungsschalter reduziert wird und damit die mögliche Dauerlast, d.h. das dauerhaft einstellbare Anlauf- bzw. Stillstandsdrehmoment erhöht werden kann.

Die Anzahl der gezeigten Arbeitspunkte ist rein beispielhaft zu verstehen. Generell ist es möglich, zur Durchführung des Verfahrens nur zwei unterschiedliche Arbeitspunkte anzufahren. Alternativ ist es möglich, eine höhere Anzahl, wie drei, vier, fünf oder mehr unterschiedliche Arbeitspunkte zyklisch anzufahren.

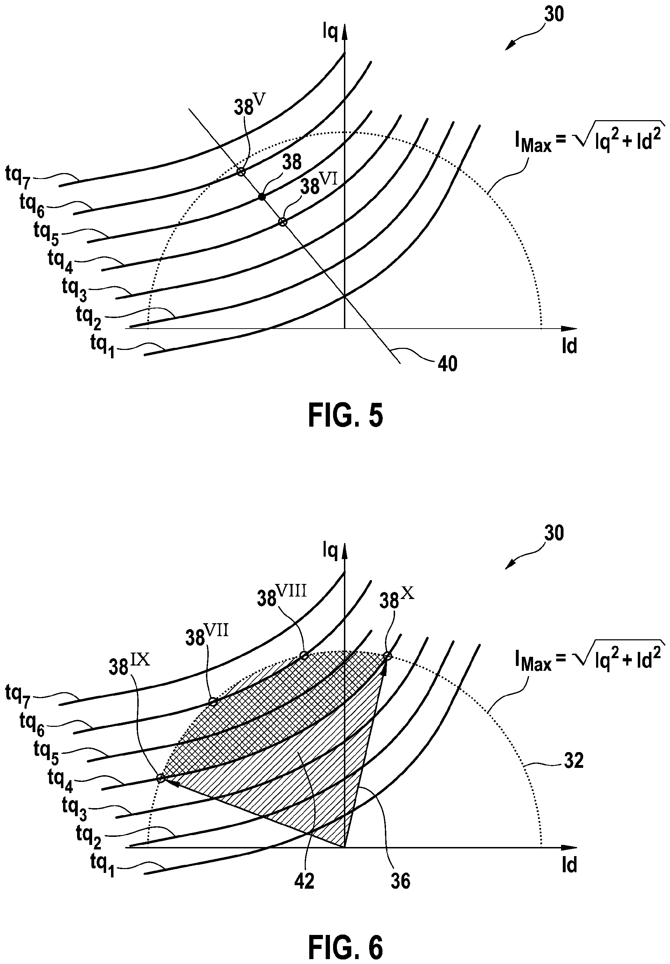

Fig. 5 zeigt eine alternative Ausführungsform eines Verfahrens zum Ansteuern einer elektrischen Maschine im Motoranlaufbetrieb. Auch hierbei findet eine Arbeitspunktverschiebung zur Einrichtung eines Anlaufdrehmomentes tq₅ statt. Dabei werden die Leistungsschalter so angesteuert, dass in schneller Folge Arbeitspunkte zur Bereitstellung unterschiedlicher Drehmomente angefahren werden, wie es in Fig. 5 schematisch bei 38^{V} und 38^{VI} gezeigt ist. Im Mittelwert sollten die auf diese Weise bereitgestellten Drehmomente das angeforderte Anlaufdrehmoment tq₅ ergeben. In Fig. 5 ist beispielhaft dargestellt, dass in Folge ein höheres Drehmoment tq₆ und ein niedrigeres Drehmoment tq₄ angefahren werden. Auch im vorliegenden Fall ist die Anzahl der gewählten Arbeitspunkte 38, 38^{V}, 38^{VI} nur beispielhaft. Generell ist es möglich, das Verfahren mit nur zwei Arbeitspunkten oder einer deutlich höheren Anzahl von Arbeitspunkten durchzuführen.

Ferner zeigt Fig. 5, dass die Modulation des Drehmomentes vorzugsweise entlang einer Linie 40 erfolgt, bei der der zur Erzielung der jeweiligen Drehmomente erforderliche Gesamtstrom minimal ist.

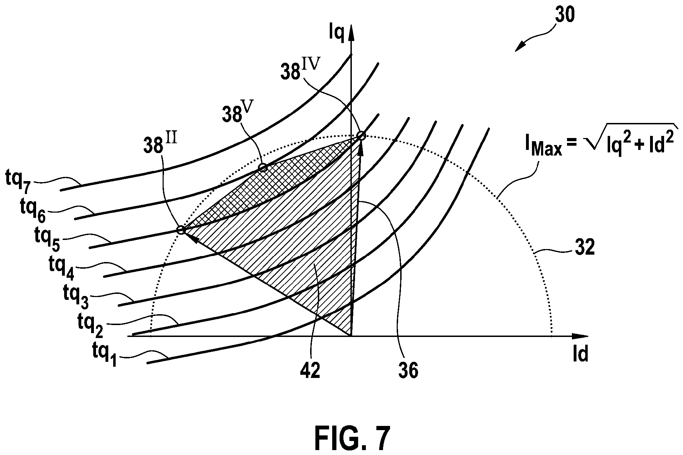

Fig. 6 und 7 zeigen weitere alternative Ausführungsformen von Verfahren zum Ansteuern einer elektrischen Maschine im Motoranlaufbetrieb. Bei den in Fig. 6 und 7 gezeigten Verfahren wird ein Stromzeiger jeweils schrittweise zwischen unterschiedlichen Arbeitspunkten bewegt, die sowohl auf Linien konstanten Drehmoments (tq₁ - tq₇) liegen können als auch unterschiedliche Drehmomente beinhalten können. Hierzu wird in dem dq-Diagramm jeweils ein nutzbarer Bereich 42 des Stromzeigers 36 definiert. In Fig. 6 kann der Stromzeiger 36 beispielsweise zwischen vier Arbeitspunken 38^{VII}, 38^{VIII}, 38^{IX}, 38^{X} oszillieren bzw. schrittweise bewegt werden. Die Arbeitspunkte 38^{VII}, 38^{VIII} liegen dabei auf der Linie tq₆ konstanten Drehmomentes. Die anderen Arbeitspunkte 38^{IX}, 38^{X} liegen auf der Linie tq₄. Sämtliche Arbeitspunkte liegen bei dieser Ausführungsform innerhalb des Halbkreises, der den maximalen Gesamtstrom Iₘₐₓ definiert.

Bei der Ausführungsform der Fig. 7 werden beispielsweise drei Arbeitspunkte oszillierend bzw. schrittweise angefahren. Dies sind die Arbeitspunkte 38", 38^{IV}, 38^{V}, die bereits in Fig. 4 bzw. Fig. 5 beschrieben worden sind.

## Patentansprüche

1. Verfahren zum Ansteuern einer elektrischen Maschine (14) im Motoranlaufbetrieb mittels einer Leistungselektronik (18), insbesondere zur Anwendung in einem Kraftfahrzeug (10), wobei die Leistungselektronik (18) eine Mehrzahl von ansteuerbaren Leistungsschaltern (26) aufweist, die dazu an der elektrischen Maschine (14) angeschlossen sind, die elektrische Maschine (14) mehrphasig mit elektrischem Strom (I) zu versorgen, wobei die Leistungselektronik (18) so angesteuert wird, dass die still stehende oder anlaufende elektrische Maschine (14) ein Stillstands- oder Anlaufdrehmoment (t) abgibt, wobei die Ansteuerung der Leistungselektronik (18) zur Abgabe des Stillstands- oder Anlaufdrehmoments (t) derart erfolgt, dass die Schaltstellung von wenigstens zwei der Leistungsschalter (26) verändert wird, so dass die Leistungsschalter (26) gleichmäßiger belastet werden, **dadurch gekennzeichnet, dass** die Ansteuerung feldorientiert erfolgt, wobei ein Raumzeiger (36) zur Abgabe des Anlaufdrehmomentes (t) schrittweise verändert wird, und wobei der Raumzeiger ein Stromzeiger (36) ist, der zur Abgabe des Anlaufdrehmomentes (t) schrittweise entlang einer Linie (t_{q}) konstanten Drehmoments verdreht wird.

2. Verfahren nach Anspruch 1, wobei der Raumzeiger ein Stromzeiger (36) ist, der schrittweise derart verändert wird, dass sich das von der elektrischen Maschine abgegebene Drehmoment (t) verändert.

3. Verfahren nach Anspruch 2, wobei der Stromzeiger (36) entlang einer Linie (40) minimalen Gesamtstromes bewegt wird.

4. Verfahren nach einem der Ansprüche 1-3, wobei der Raumzeiger (36) oszillierend oder zyklisch im Bereich zwischen wenigstens zwei Grenzwerten (38 II, 38 IV, 38 V , 38 VI) bewegt wird.

5. Vorrichtung (18, 22) zum Ansteuern einer elektrischen Maschine (14) im Motoranlaufbetrieb, insbesondere zur Anwendung in einem Kraftfahrzeug (10), mit einer Leistungselektronik (18), die eine Mehrzahl von ansteuerbaren Leistungsschaltern (26) aufweist, die dazu angeschlossen sind, die elektrische Maschine (14) mehrphasig mit elektrischem Strom (I) zu versorgen, und mit einem Steuergerät (22) zur Ansteuerung der Leistungselektronik (18), wobei das Steuergerät (22) dazu eingerichtet ist, das Verfahren nach einem der Ansprüche 1-4 durchzuführen.

6. Kraftfahrzeug-Antriebsstrang (12) mit wenigstens einer elektrischen Maschine (14) zum Bereitstellen von Antriebsleistung und mit einer Vorrichtung (18, 22) zum Ansteuern der elektrischen Maschine (14) nach Anspruch 5.

## Claims

1. Method for driving an electric machine (14) in motor start-up mode by means of power electronics (18), in particular for use in a motor vehicle (10), wherein the power electronics (18) have a plurality of driveable power switches (26), which are connected to the electric machine (14) for the purpose of supplying the electric machine (14) with electric power (I) in multi-phase form, wherein the power electronics (18) are driven in such a way that the stationary or starting electric machine (14) outputs a stationary or starting torque (t), wherein the power electronics (18) for outputting the stationary or starting torque (t) are driven in such a way that the switching position of at least two of the power switches (26) is changed, so that the power switches (26) are loaded uniformly, **characterized in that** the driving is carried out in a field-oriented manner, wherein space vectors (36) for outputting the starting torque (t) are changed incrementally, and wherein the space vector is a current vector (36) which, to output the starting torque (t), is rotated incrementally along a line (t_{q}) of constant torque.

2. Method according to Claim 1, wherein the space vector is a current vector (36), which is changed incrementally in such a way that the torque (t) output by the electric machine changes.

3. Method according to Claim 2, wherein the current vector (36) is moved along a line (40) of minimal total current.

4. Method according to one of Claims 1-3, wherein the space vector (36) is moved in an oscillatory manner or cyclically in the range between at least two limiting values (38 II, 38 IV, 38 V, 38 VI).

5. Apparatus (18, 22) for driving an electric machine (14) in the motor start-up mode in particular for use in a motor vehicle (10), having power electronics (18), which have a plurality of driveable power switches (26), which are connected for the purpose of supplying the electric machine (14) with electric power (I) in a multi-phase manner, and having a controller (22) for driving the power electronics (18), wherein the controller (22) is configured to carry out the method according to one of Claims 1-4.

6. Motor vehicle drive train (12) having at least one electric machine (14) for providing drive power, and having an apparatus (18, 22) for driving the electric machine (14) according to Claim 5.

## Revendications

1. Procédé de commande d'un moteur électrique (14) dans le mode de démarrage du moteur au moyen d'une électronique de puissance (18), notamment pour une utilisation dans un véhicule à moteur (10), dans lequel l'électronique de puissance (18) présente une pluralité de disjoncteurs commandés (26) connectés au moteur électrique (14) pour l'alimentation multiphase du moteur électrique (14) en courant électrique (I), dans lequel l'électronique de puissance (18) est commandée de telle manière que le moteur électrique à l'arrêt ou au démarrage (14) produise un couple d'arrêt ou de démarrage (t), dans lequel la commande de l'électronique de puissance (18) pour la production du couple d'arrêt ou de démarrage (t) est réalisée de telle manière que la position de commutation d'au moins deux des disjoncteurs (26) soit modifiée afin que les disjoncteurs (26) soient soumis à une sollicitation plus uniforme, **caractérisé en ce que** la commande est effectuée de manière orientée suivant le champ, dans lequel un vecteur spatial (36) pour la production du couple de démarrage (t) est modifié pas à pas, et dans lequel le vecteur spatial est un vecteur de courant (36) qui est amené à tourner pas à pas le long d'une courbe de couple constant (t_{q}) afin de produire le couple de démarrage (t).

2. Procédé selon la revendication 1, dans lequel le vecteur spatial est un vecteur de courant (36) qui est modifié pas à pas de manière à modifier le couple (t) produit par le moteur électrique.

3. Procédé selon la revendication 2, dans lequel le vecteur de courant (36) est déplacé le long d'une courbe (40) de courant total minimal.

4. Procédé selon l'une des revendications 1 à 3, dans lequel le vecteur spatial (36) est déplacé de manière oscillante ou cyclique dans la plage comprise entre au moins deux valeurs limites (38 II, 38 IV, 38 V, 38 VI).

5. Dispositif (18, 22) de commande d'un moteur électrique (14) dans le mode de démarrage du moteur, notamment pour une utilisation dans un véhicule à moteur (10), comprenant une électronique de puissance (18) qui présente une pluralité de disjoncteurs (26) connectés pour l'alimentation multiphase du moteur électrique (14) en courant électrique (I), et un appareil de commande (22) pour commander l'électronique de puissance (18), dans lequel l'appareil de commande (22) est conçu pour mettre en œuvre le procédé selon l'une des revendications 1 à 4.

6. Chaîne cinématique de véhicule à moteur (12) comprenant au moins un moteur électrique (14) destiné à fournir une puissance motrice et un dispositif (18, 22) destiné à commander le moteur électrique (14) selon la revendication 5.
